# EUROPEAN PATENT SPECIFICATION

(11) **EP 2 948 603 B1**
(45) Date of publication and mention of the grant of the patent: **09.09.2020**
(21) Application number: 14704957.1
(22) Date of filing: 23.01.2014
(51) Int. Cl.: E04D 12/00, D06N 5/00, E04D 3/18, E04D 3/369, E04D 5/06, E04D 5/10, E04D 11/02, B32B 5/26, B32B 21/10

(54) **FIRE-RESISTANT ROOF SYSTEM AND COMPOSITE MEMBRANE**
FEUERBESTÄNDIGES DACHSYSTEM UND KOMPOSITMEMBRAN
SYSTÈME DE TOIT RÉSISTANT AU FEU ET MEMBRANE COMPOSITE

(30) Priority: 23.01.2013 US 201361755666 P; 13.03.2013 US 201313798413; 19.07.2013 US 201361856258 P
(43) Date of publication of application: 02.12.2015
(73) Proprietor: Firestone Building Products Company, LLC, Nashville, TN 37201 (US)
(72) Inventor: ZHOU, Wensheng, Carmel, Indiana 46033 (US); HUBBARD, Michael J., Anderson, Indiana 46011 (US); SOPKO, Allen, Zionsville, Indiana 46077 (US); CARR, Joseph, Indianapolis, Indiana 46250 (US)
(74) Representative: Adam, Holger
(86) International application number: PCT/US2014/012732
(87) International publication number: WO 2014/116815

(56) References cited:
- EP-A1- 1 541 338
- EP-A1- 2 532 515
- WO-A1-2012/009742
- WO-A1-2012/015538
- US-A- 4 996 812
- US-A1- 2011 011 021

## Description

### FIELD OF THE INVENTION

Embodiments of the present invention are directed toward a fire-resistant roofing system including a deck and a thermoplastic membrane composite.

### BACKGROUND OF THE INVENTION

As is known in the art, roofs can be rated according to UL 790 or ASTM E 108 standards for fire resistance. A Class A roof has the highest resistance to fire. An unrated roof has the lowest resistance to fire, and class B and class C rated roofs are rated therebetween, respectively. These ratings are generally based upon flame penetration into the attic space through the roof covering, flame spread over the surface of the roof covering, and the propensity for the roof covering to become dislodged and generate embers.

Certain non-combustible roof decks can achieve a Class A rating by virtue of their construction. For example, a concrete deck typically achieves a Class A rating. Other roofs, such as those carrying an aluminum covering, may require complementary materials to achieve a Class A rating. For example, an asphaltic underlayment may be placed under an aluminum roof covering to achieve a Class A rating.

Where the roof deck is a combustible deck, such as a wood deck, it can be extremely difficult to achieve a Class A rating. In many situations, robust and expensive underlayment is required to achieve a Class A rating over a combustible deck. For example, fiberglass-backed gypsum board (e.g., DensDeck™) can be applied over a combustible deck to achieve a Class A rating. Alternatively, or in addition thereto, a heavy underlayment (e.g., 72 pound felt or cap sheet) may be required to achieve a Class A rating over a wood roof deck.

The difficulty in achieving a Class A rating can be further complicated by the type of roof covering employed over the combustible deck. Where a roof covering is metal (e.g., aluminum), the complementary construction material, such as an underlayment, may not need to be as robust to achieve a Class A rating. On the other hand, where the roof covering is a polymeric membrane (e.g., a thermoplastic sheet), the ability to achieve a Class A rating over a combustible deck is not trivial.

Among the prior art, US 2011/011021 A1 describes a fire resistant roofing system. Furthermore, EP 2 532 515 A1 discloses a multilayer bituminous-polymeric material and method for producing the same. Moreover, EP 1 541 338 A1 discloses a method of producing membranes for use in the field of house building and construction. Among further prior art, WO 2012/009742 A1 discloses a fire resistant blanket of flexible intumescent material.

### BRIEF DESCRIPTION OF THE DRAWINGS

Fig. 1 is a cross-sectional view of a roof system according to embodiments of the invention.
Fig. 2 is a perspective, exploded view of a thermoplastic membrane having a fabric reinforcement according to embodiments of the present invention.
Fig. 3 is a cross-sectional view of a thermoplastic membrane having a fabric backing according to embodiments of the invention.
Fig. 4 is a cross-sectional view of a thermoplastic membrane including a lap edge according to embodiments of the invention.

### SUMMARY OF THE INVENTION

Aspects of the invention provide a roof assembly according to claim 1 comprising: a roof deck; a thermoplastic membrane covering the deck; and a fabric having disposed thereon expandable graphite.

Other aspects provide a membrane composite according to claim 10 comprising: a thermoplastic membrane; and a fabric carrying expandable graphite.

### DETAILED DESCRIPTION OF ILLUSTRATIVE EMBODIMENTS

Embodiments of the present invention are based, at least in part, on the discovery of a fire-rated roof system (e.g., Class A roof system (UL 790 or ASTM E 108) using a thermoplastic membrane over a wood deck at a slope of 1/12) that includes a polymeric membrane composite. The composite includes a polymeric membrane in combination with a fabric that carries expandable graphite. The composite includes a thermoplastic membrane and a fabric backing that carries expandable graphite, as described in claim 1. While the prior art could achieve a similar Class A rating using relatively robust and expensive complementary materials (e.g., fiberglass-backed gypsum), the present invention advantageously achieves a Class A rating by merely employing the composite of the invention without any other fire-barrier material (e.g. without a fire resistant slipsheet or fiberglass-backed board). Moreover, these advantages are provided in conjunction with weathering protection (i.e. waterproof membrane) in one single composite article. Among other benefits, the use of the composite of the present invention simplifies installation and saves in labor costs associated with installation.

### ROOF SYSTEM

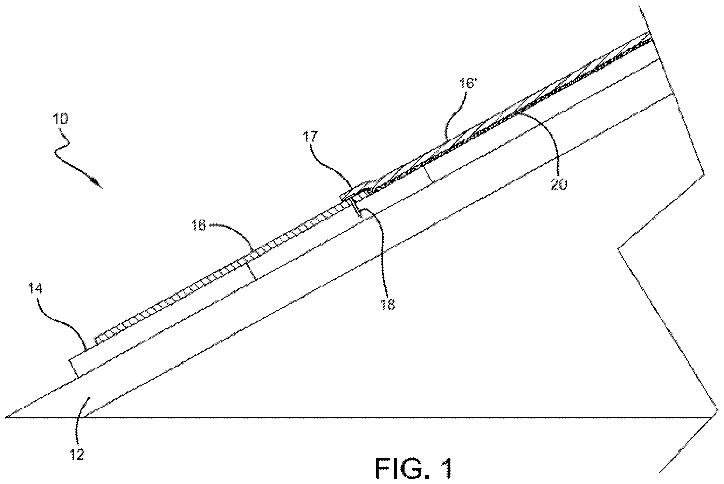

In one or more embodiments, the Class A roof system of the present invention may be described with reference to Fig. 1. System 10 includes a combustible deck 12, an optional insulating layer 14, and one or more thermoplastic membrane composites 16 and 16', which may also be referred to as sheets 16 and 16' or panels 16 and 16'. Each of the respective panels may be referred to as membrane assemblies, especially when describing the subcomponents thereof. As indicated above, and as will be described in greater detail below, membrane assemblies 16 and 16' include a fabric that carries expandable graphite. Membrane assemblies 16 and 16' may be secured to deck 12 and/or insulating layer 14 by using known techniques. In one or more embodiments, membrane assemblies 16 and 16' are mechanically attached to deck 12 through a plurality of mechanical fasteners. For example, fastener 18 may be installed in lap region 17 of membrane assemblies 16 and 16' as shown in Fig. 1.

In other embodiments, membrane assembly 16 may be secured to deck 12 and/or insulation layer 14 by use of an adhesive that may, in certain embodiments, secure substantially all of the membrane to deck 12 and/or insulating layer 14, and thereby provide a system that may be referred to as a fully-adhered roofing system. The use of an adhesive to secure the membrane panels to the roof deck and/or insulation layer may be an exclusive mode of attachment to the roof deck and/or insulation layer, or an adhesive may be used in combination with other modes of attachment. In one or more embodiments, the use of an adhesive forms an adhesive layer 20. As will be described in further detail below, adhesive layer 20 may be interspersed within and/or adhered to a fabric backing, which is not shown in Fig. 1. In yet other embodiments, membrane 16 may be secured to deck 12 and/or insulation layer 14 by use of ballasting as is known in the art.

As the skilled person understands, panels 16 and 16' are not only secured to deck 12 and/or insulation layer 14, but the individual panels may be seamed together to create a water-impervious membrane across the roof deck. As shown in Fig. 1, individual panels 16 and 16' are seamed together in lap region 17, where first panel 16' overlaps second panel 16. As previously explained, fasteners (e.g., fastener 18) may be disposed in lap region 17, thereby allowing second panel 16 to cover fastener 18, as well as any penetrations caused by fastener 18. The skilled person will appreciate that lap region 17 may be seamed using a variety of techniques. In one or more embodiments, the seam may be formed by heat welding the respective panels to each other within lap region 17. This may be accomplished by taking advantage of the thermoplastic nature of the panels. Techniques for heat welding thermoplastic membranes are known in the art as described in U.S. Publication Nos 2007/0186505, 2004/0020585, 2002/0003026, 2011/0155321, 2007/0208139, and 2005/0183831. In other embodiments, a seam tape or liquid adhesive may be employed to form a seam within lap region 17.

### MEMBRANE ASSEMBLY

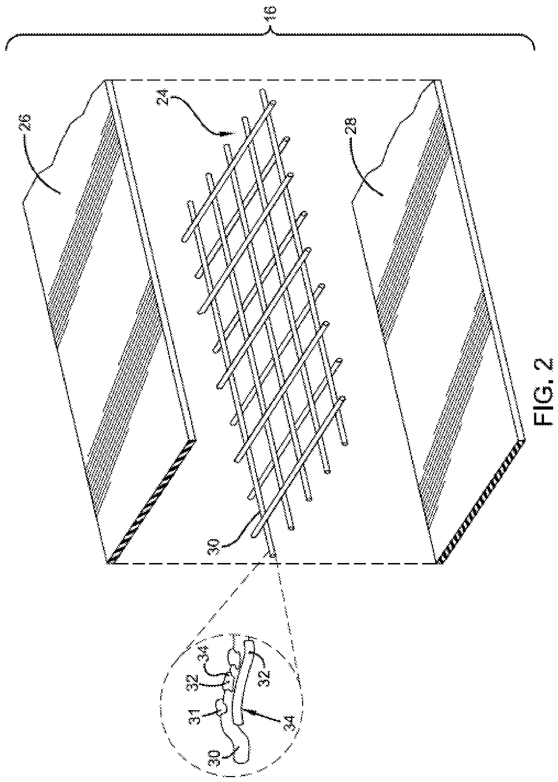

In the present invention, thermoplastic membrane assembly 16 includes reinforcing fabric 24 as shown in Fig. 2. More specifically, membrane 16 is a laminate including first layer 26, second layer 28, and reinforcing fabric 24 laminated between first layer 26 and second layer 28.

### THERMOPLASTIC LAYERS

Embodiments of the present invention are not necessarily limited by the composition of the individual thermoplastic layers of the thermoplastic membrane (e.g., layers 26 and 28). In one or more embodiments, the thermoplastic layers may include thermoplastic polyolefins, polyvinyl chloride, ethylene vinylacetate polymers, ethylene alkylacrylate polymers, and the like, and mixtures thereof.

In one or more embodiments, the thermoplastic polyolefin polymers may include an olefinic reactor copolymer, which may also be referred to as in-reactor copolymer. Reactor copolymers are generally known in the art and may include blends of olefinic polymers that result from the polymerization of ethylene and α-olefins (*e.g*., propylene) with sundry catalyst systems. In one or more embodiments, these blends are made by in-reactor sequential polymerization. Reactor copolymers useful in one or more embodiments include those disclosed in U.S. Patent No. 6,451,897. Reactor copolymers, which are also referred to as TPO resins, are commercially available under the tradename HIFAX™ (Lyondellbassel); these materials are believed to include in-reactor blends of ethylene-propylene rubber and polypropylene or polypropylene copolymers. In one or more embodiments, the in-reactor copolymers may be physically blended with other polyolefins. For example, in reactor copolymers may be blended with linear low density polyethene.

In other embodiments, the thermoplastic polyolefin polymers may include one or more polyolefins such as propylene-based thermoplastic polymers, plastomers, and/or ethylene-based thermoplastic polymers. In one or more embodiments, the thermoplastic polymer may include a blend of olefinic polymers. Useful blends include those described in International Application No. PCT/US06/033522. For example, a particular blend may include (i) a plastomer, (ii) a low density polyethylene, and (iii) a propylene-based polymer.

In one or more embodiments, propylene-based polymers may include polypropylene homopolymer or copolymers of propylene and a comonomer, where the copolymer includes, on a mole basis, a majority of *mer* units deriving from propylene. In one or more embodiments, the propylene-based copolymers may include from about 2 to about 6 mole percent, and in other embodiments from about 3 to about 5 mole percent *mer* units deriving from the comonomer with the remainder including *mer* units deriving from propylene. In one or more embodiments, the comonomer includes at least one of ethylene and an α-olefin. The α-olefins may include butene-1, pentene-1, hexene-1, octene-1, or 4-methyl-pentene-1. In one or more embodiments, the copolymers of propylene and a comonorrier may include random copolymers. Random copolymers may include those propylene-based copolymers where the comonomer is randomly distributed across the polymer backbone.

The propylene-based polymers employed in one or more embodiments of this invention may be characterized by a melt flow rate of from about 0.5 to about 15 dg/min, in other embodiments from about 0.7 to about 12 dg/min, in other embodiments from about 1 to about 10 dg/min, and in other embodiments from about 1.5 to about 3 dg/min per ASTM D-1238 at 230°C and 2.16 kg load. In these or other embodiments, the propylene-based polymers may have a weight average molecular weight (M_{w}) of from about 1 x 10⁵ to about 5 x 10⁵ g/mole, in other embodiments from about 2 x 10⁵ to about 4 x 10⁵ g/mole, and in other embodiments from about 3 x 10⁵ to about 4 x 10⁵ g/mole, as measured by GPC with polystyrene standards. The molecular weight distribution of these propylene-based copolymer may be from about 2.5 to about 4, in other embodiments from about 2.7 to about 3.5, and in other embodiments from about 2.8 to about 3.2.

In one or more embodiments, propylene-based polymers may be characterized by a melt temperature (Tₘ) that is from about 165°C to about 130°C, in other embodiments from about 160 to about 140°C, and in other embodiments from about 155°C to about 140°C. In one or more embodiments, particularly where the propylene-based polymer is a copolymer of propylene and a comonomer, the melt temperature may be below 160°C, in other embodiments below 155°C, in other embodiments below 150°C, and in other embodiments below 145°C. In one or more embodiments, they may have a crystallization temperature (T_{c}) of about at least 90°C, in other embodiments at least about 95°C, and in other embodiments at least 100°C, with one embodiment ranging from 105° to 115°C.

Also, these propylene-based polymers may be characterized by having a heat of fusion of at least 25 J/g, in other embodiments in excess of 50 J/g, in other embodiments in excess of 100 J/g, and in other embodiments in excess of 140 J/g.

In one or more embodiments, the propylene-based polymers may be characterized by a flexural modulus, which may also be referred to as a 1% secant modulus, in excess of 120,000 psi, in other embodiments in excess of 125,000, in other embodiments in excess of 130,000 psi, in other embodiments in excess of 133,000 psi, in other embodiments in excess of 135,000 psi, and in other embodiments in excess of 137,000 psi, as measured according to ASTM D-790.

Useful propylene-based polymers include those that are commercially available. For example, propylene-based polymers can be obtained under the tradename PP7620Z™ (Fina), PP33BF01™ (Equistar), or under the tradename TR3020™ (Sunoco).

In one or more embodiments, plastomers include ethylene-α-olefin copolymers. The plastomer employed in one or more embodiments of this invention includes those described in U.S. Patent Nos. 6,207,754, 6,506,842, 5,226,392, and 5,747,592. This copolymer may include from about 1.0 to about 15 mole percent, in other embodiments from about 2 to about 12, in other embodiments from about 3 to about 9 mole percent, and in other embodiments from about 3.5 to about 8 mole percent *mer* units deriving from α-olefins, with the balance including *mer* units deriving from ethylene. The α-olefin employed in preparing the plastomer of one or more embodiments of this invention may include butene-1, pentene-1, hexene-1, octene- 1, or 4-methyl-pentene-1.

In one or more embodiments, plastomers may be characterized by a density of from about 0.865 g/cc to about 0.900 g/cc, in other embodiments from about 0.870 to about 0.890 g/cc, and in other embodiments from about 0.875 to about 0.880 g/cc per ASTM D-792. In these or other embodiments, the density of the plastomers may be less than 0.900 g/cc, in other embodiments less than 0.890 g/cc, in other embodiments less than 0.880 g/cc, and in other embodiments less than 0.875 g/cc.

In one or more embodiments, the plastomer may be characterized by a weight average molecular weight of from about 7 x 10⁴ to 13 x 10⁴ g/mole, in other embodiments from about 8 x 10⁴ to about 12 x 10⁴ g/mole, and in other embodiments from about 9 x 10⁴ to about 11 x 10⁴ g/mole as measured by using GPC with polystyrene standards. In these or other embodiments, the plastomer may be characterized by a weight average molecular weight in excess of 5 x 10⁴ g/mole, in other embodiments in excess of 6 x 10⁴ g/mole, in other embodiments in excess of 7 x 10⁴ g/mole, and in other embodiments in excess of 9 x 10⁴ g/mole. In these or other embodiments, the plastomer may be characterized by a molecular weight distribution (M_{w}/Mₙ) that is from about 1.5 to 2.8, in other embodiments 1.7 to 2.4, and in other embodiments 2 to 2.3.

In these or other embodiments, the plastomer may be characterized by a melt index of from about 0.1 to about 8, in other embodiments from about 0.3 to about 7, and in other embodiments from about 0.5 to about 5 per ASTM D-1238 at 190°C and 2.16 kg load.

The uniformity of the comonomer distribution of the plastomer of one or more embodiments, when expressed as a comonomer distribution breadth index value (CDBI), provides for a CDBI of greater than 60, in other embodiments greater than 80, and in other embodiments greater than 90.

In one or more embodiments, the plastomer may be characterized by a DSC melting point curve that exhibits the occurrence of a single melting point break occurring in the region of 50 to 110°C.

The plastomer of one or more embodiments of this invention may be prepared by using a single-site coordination catalyst including metallocene catalyst, which are conventionally known in the art.

Useful plastomers include those that are commercially available. For example, plastomer can be obtained under the tradename EXXACT™ 8201 (ExxonMobil); or under the tradename ENGAGE™ 8180 (Dow DuPont).In one or more embodiments, the low density polyethylene includes an ethylene-α-olefin copolymer. In one or more embodiments, the low density polyethylene includes linear low density polyethylene. The linear low density polyethylene employed in one or more embodiments of this invention may be similar to that described in U.S. Patent No. 5,266,392. This copolymer may include from about 2.5 to about 13 mole percent, and in other embodiments from about 3.5 to about 10 mole percent, *mer* units deriving from α-olefins, with the balance including *mer* units deriving from ethylene. The α-olefin included in the linear low density polyethylene of one or more embodiments of this invention may include butene-1, pentene-1, hexene-1, octene-1, or 4-methyl-pentene-1. In one or more embodiments, the linear low density polyethylene is devoid or substantially devoid of propylene *mer* units (*i.e.,* units deriving from propylene). Substantially devoid refers to that amount or less of propylene *mer* units that would otherwise have an appreciable impact on the copolymer or the compositions of this invention if present.

The linear low density polyethylene of one or more embodiments of this invention can be characterized by a density of from about 0.885 g/cc to about 0.930 g/cc, in other embodiments from about 0.900 g/cc to about 0.920 g/cc, and in other embodiments from about 0.900 g/cc to about 0.910 g/cc per ASTM D-792.

In one or more embodiments, the linear low density polyethylene may be characterized by a weight average molecular weight of from about 1 x 10⁵ to about 5 x 10⁵ g/mole, in other embodiments 2 x 10⁵ to about 10 x 10⁵ g/mole, in other embodiments from about 5 x 10⁵ to about 8 x 10⁵ g/mole, and in other embodiments from about 6 x 10⁵ to about 7 x 10⁵ g/mole as measured by GPC with polystyrene standards. In these or other embodiments, the linear low density polyethylene may be characterized by a molecular weight distribution (M_{w}/Mₙ) of from about 2.5 to about 25, in other embodiments from about 3 to about 20, and in other embodiments from about 3.5 to about 10. In these or other embodiments, the linear low density polyethylene may be characterized by a melt flow rate of from about 0.2 to about 10 dg/min, in other embodiments from about 0.4 to about 5 dg/min, and in other embodiments from about 0.6 to about 2 dg/min per ASTM D-1238 at 230°C and 2.16 kg load.

The linear low density polyethylene of one or more embodiments of this invention may be prepared by using a convention Ziegler Natta coordination catalyst system.

Useful linear low density polyethylene includes those that are commercially available. For example, linear low density polyethylene can be obtained under the tradename Dowlex™ 2267G (Dow); or under the tradename DFDA-1010 NT7 (Dow); or under the tradename GA502023 (Lyondell).

In one or more embodiments, useful thermoplastic vulcanizates include those available under the tradename UniPrene (Teknor Apex)® and Santoprene (ExonMobil)®.

Useful ethylene alkyl-acrylates include those available under the tradename ELVALOY® (DuPont).

In one or more embodiments, block copolymers that may be used include styrene-butadiene block copolymers such as styrene-butadiene-styrene block copolymers. These block copolymers may be blended with polyolefins such as polypropylene to form thermoplastic compositions that are useful in the practice of this invention.

In one or more embodiments, thermoplastic polyolefins may include propylene-based elastomers such as those available under the tradenames VISTAMAXX (Exxonmobil) and VERSIFY (Dow Chemical).

In one or more embodiments, the thermoplastic polymer or polymers forming the thermoplastic matrix in which the expandable graphite is dispersed has a melt temperature below 200 °C, in other embodiments below 180 °C, in other embodiments below 160 °C, and in other embodiments below 150 °C.

In one or more embodiments, layers 26 and 28 may be characterized by a thickness of from about 0.38 to about 1.8 mm (about 15 to about 70 mils), in other embodiments from about 0.51 to about 1.5 mm (about 20 to about 60 mils), and in other embodiments from about 0.76 to about 1.3 mm (about 30 to about 50 mils).

In one or more embodiments, layers 26 and/or 28 may be homogenous; i.e., they may be monoextruded sheets or layers of thermoplastic material. In other embodiments, layers 26 and 28 may include two or more co-extruded layers. These individual co-extruded layers of any given layer of the laminate (e.g., layer 26 and/or 28) may be distinct from other coextruded layers within any respective laminate layer. Multi-layered, co-extruded thermoplastic roofing membranes are known in the art as described in U.S. Patent Nos 7,749,924, 7,632,763, 5,314,556, and U.S. Publication Nos 2012/0244340, 2009/0181216, 2009/0137168, 2007/0194482, and 2007/0193167.

### REINFORCING FABRIC/SCRIM

As discussed above, membranes 16 and 16' include reinforcing fabric 24. The reinforcing fabric 24 includes a fabric substrate having disposed on a surface thereof a coating composition comprising a binder and particles of expandable graphite. For example, as shown in Fig. 2, fabric 24 includes fabric substrate 30 and expandable graphite 32 disposed on a surface of substrate 30. The expandable graphite 32 is dispersed within a polymeric matrix 34, which may also be referred to as binder 34, that is disposed on fabric substrate 30. In this regard, reference may be made to an expandable graphite coating 31 disposed on fabric substrate 30. As shown in Fig. 2, coating 31 may form a layer or partial layer on the fibers or filaments of substrate 30. In other embodiments, coating 31 forms a layer or partial layer over the entire surface of substrate 30.

In one or more embodiments, fabric substrate 24 may include a woven, knitted, or non-woven fabric. In particular embodiments, fabric substrate 24 may be of the type of fabric generally known in the art for preparing roofing membranes. Useful fabric substrates include warp-knit, weft-inserted fabrics, such as those that as are known in the art and, for example, described in U.S. Patent Nos 4,491,617, 4,539,254, 4,615,934, and 4,780,350.

### EXPANDABLE GRAPHITE

In one or more embodiments, expandable graphite, which may also be referred to as expandable flake graphite, intumescent flake graphite, or expandable flake, includes intercalated graphite in which an intercallant material is included between the graphite layers of graphite crystal or particle. Examples of intercallant materials include halogens, alkali metals, sulfates, nitrates, various organic acids, aluminum chlorides, ferric chlorides, other metal halides, arsenic sulfides, and thallium sulfides. In certain embodiments of the present invention, the expandable graphite includes non-halogenated intercallant materials. In certain embodiments, the expandable graphite includes sulfate intercallants, also referred to as graphite bisulfate. As is known in the art, bisulfate intercalation is achieved by treating highly crystalline natural flake graphite with a mixture of sulfuric acid and other oxidizing agents which act to catalyze the sulfate intercalation.

Commercially available examples of expandable graphite include HPMS Expandable Graphite (HP Materials Solutions, Inc., Woodland Hills, CA) and Expandable Graphite Grades 1721 (Asbury Carbons, Asbury, NJ). Other commercial grades contemplated as useful in the present invention include 1722, 3393, 3577, 3626, and 1722HT (Asbury Carbons, Asbury, NJ),

In one or more embodiments, the expandable graphite may be characterized as having a mean or average size in the range from about 30 µm to about 1.5 mm, in other embodiments from about 50 µm to about 1.0 mm, and in other embodiments from about 180 to about 850 µm. In certain embodiments, the expandable graphite may be characterized as having a mean or average size of at least 30 µm, in other embodiments at least 44 µm, in other embodiments at least 180 µm, and in other embodiments at least 300 µm. In one or more embodiments, expandable graphite may be characterized as having a mean or average size of at most 1.5 mm, in other embodiments at most 1.0 mm, in other embodiments at most 850 µm, in other embodiments at most 600 µm, in yet other embodiments at most 500 µm, and in still other embodiments at most 400 µm. Useful expandable graphite includes Graphite Grade #1721 (Asbury Carbons), which has a nominal size of greater than 300 µm.

In one or more embodiments of the present invention, the expandable graphite may be characterized as having a nominal particle size of 20x50 (US sieve). US sieve 20 has an opening equivalent to 0.841 mm and US sieve 50 has an opening equivalent to 0.297 mm. Therefore, a nominal particle size of 20x50 indicates the graphite particles are at least 0.297 mm and at most 0.841 mm.

In one or more embodiments, the expandable graphite may be characterized as having a carbon content in the range from about 75% to about 99%. In certain embodiments, the expandable graphite may be characterized as having a carbon content of at least 80%, in other embodiments at least 85%, in other embodiments at least 90%, in yet other embodiments at least 95%, in other embodiments at least 98%, and in still other embodiments at least 99% carbon.

In one or more embodiments, the expandable graphite may be characterized as having a sulfur content in the range from about 0% to about 8%, in other embodiments from about 2.6% to about 5.0%, and in other embodiments from about 3.0% to about 3.5%. In certain embodiments, the expandable graphite may be characterized as having a sulfur content of at least 0%, in other embodiments at least 2.6%, in other embodiments at least 2.9%, in other embodiments at least 3.2%, and in other embodiments 3.5%. In certain embodiments, the expandable graphite may be characterized as having a sulfur content of at most 8%, in other embodiments at most 5%, in other embodiments at most 3.5%.

In one or more embodiments, the expandable graphite may be characterized as having an expansion ratio (cc/g) in the range from about 10:1 to about 500:1, in other embodiments at least 20:1 to about 450:1, in other embodiments at least 30:1 to about 400:1, in other embodiments from about 50:1 to about 350:1. In certain embodiments, the expandable graphite may be characterized as having an expansion ratio (cc/g) of at least 10:1, in other embodiments at least 20:1, in other embodiments at least 30:1, in other embodiments at least 40:1, in other embodiments at least 50:1, in other embodiments at least 60:1, in other embodiments at least 90:1, in other embodiments at least 160:1, in other embodiments at least 210:1, in other embodiments at least 220:1, in other embodiments at least 230:1, in other embodiments at least 270:1, in other embodiments at least 290:1, and in yet other embodiments at least 300:1. In certain embodiments, the expandable graphite may be characterized as having an expansion ratio (cc/g) of at most 350:1, and in yet other embodiments at most 300:1.

In one or more embodiments, the expandable graphite, as it exists with the thermoplastic component of the thermoplastic membrane of the present invention, may be partially expanded. In one or more embodiments, the expandable graphite is not expanded, however, to a deleterious degree, which includes that amount or more of expansion that will deleteriously impact the ability to form the sheet product and/or the ability of the graphite to serve as flame retardant at desirable levels, which include those levels that allow proper formation of the sheet. In one or more embodiments, the expandable graphite is expanded to at most 60%, in other embodiments at most 50%, in other embodiments at most 40%, in other embodiments at most 30%, in other embodiments at most 20%, and in other embodiments at most 10% beyond its original unexpanded size.

In one or more embodiments, the expandable graphite may be characterized as having a pH in the range from about 1 to about 12; in other embodiments from about 1 to about 6; and in yet other embodiments from about 5 to about 10. In certain embodiments, the expandable graphite may be characterized as having a pH in the range from about 4 to about 7. In one or more embodiments, the expandable graphite may be characterized as having a pH of at least 1, in other embodiments at least 4, and in other embodiments at least 5. In certain embodiments, the expandable graphite may be characterized as having a pH of at most 10, in other embodiments at most 7, and in other embodiments at most 6.

In one or more embodiments, the expandable graphite may be characterized by an onset temperature ranging from about 100 °C to about 250 °C; in other embodiments from about 160 °C to about 225 °C; and in other embodiments from about 180 °C to about 200 °C. In one or more embodiments, the expandable graphite may be characterized by an onset temperature of at least 100 °C, in other embodiments at least 130 °C, in other embodiments at least 160 °C, and in other embodiments at least 180 °C. In one or more embodiments, the expandable graphite may be characterized by an onset temperature of at most 250 °C, in other embodiments at most 225 °C, and in other embodiments at most 200 °C. Onset temperature may also be interchangeably referred to as expansion temperature; and may also be referred to as the temperature at which expansion of the graphite starts.

### COMPLEMENTARY FLAME RETARDANTS

In one or more embodiments, the expandable graphite may be disposed on the fabric substrate in conjunction with a complementary flame retardant. These complementary flame retardants may include any compound that increases the burn resistivity, particularly flame spread such as tested by UL 94 and/or UL 790, in the polymeric compositions of the present invention. Generally, useful flame retardants include those that operate by forming a char-layer across the surface of a specimen when exposed to a flame. Other flame retardants include those that operate by releasing water upon thermal decomposition of the flame retardant compound. Useful flame retardants may also be categorized as halogenated flame retardants or non-halogenated flame retardants.

Exemplary non-halogenated flame retardants include magnesium hydroxide, aluminum trihydrate, zinc borate, ammonium polyphosphate, melamine polyphosphate, and antimony oxide (Sb₂O₃). Magnesium hydroxide (Mg(OH)₂) is commercially available under the tradename Vertex™ 60, ammonium polyphosphate is commercially available under the tradename Exolite™ AP 760 (Clarian), melamine polyphosphate is available under the tradename Budit™ 3141 (Budenheim), and antimony oxide (Sb₂O₃) is commercially available under the tradename Fireshield™.

Examples of other complementary calcium borate, magnesium hydroxide, basic magnesium carbonate, aluminum trihydrate, zinc borate, gypsum, and mixtures thereof. In these or other embodiments, the complementary flame retardant includes colemanite, which is a borate mineral that is believed to include about 50-80% calcium borate.

### COATING

As noted above, fabric reinforcement 24 carries a coating 31 that includes binder 34 with expandable graphite 32 dispersed therein. The binder, which may also be referred to as a polymer latex or polymer latex binder, may include styrene-butadiene-rubber (SBR), styrene-butadiene-styrene (SBS), ethylene-vinyl-chloride (EVCl), poly-vinylidene-chloride (PVdC), modified poly-vinyl-chloride (PVC), poly-vinylalcohol (PVOH), ethylene-vinyl-actate (EVA), and poly-vinyl-acetate (PVA). In one or more embodiments, the binder may include an asphalt. In other embodiments, the binder is devoid of asphalt. In still other embodiments, the binder may include acrylic or epoxy binders or resins, which are known in the art. Generally, acrylic binders or resins include latex polymers that derive from the polymerization of acrylates, acrylic acids, methacrylates, methacrylic acids, acrylonitrile, and/or acrylamide monomer. In other embodiments, the binder may include a polyurethane.

Examples of inorganic binders that may be used with the latex binders include calcium oxide, calcium silicate, calcium sulfate, magnesium oxychloride, magnesium oxysulfate, and other complexes of some Group IIA elements (alkaline earth metals), as well as aluminum hydroxide.

In one or more embodiments, a complex inorganic binder such as portland cement, which is a mixture of various calcium-aluminum silicates, may be used. In other embodiments, the oxychloride or oxysulfate of aluminum hydroxide and/or calcium silicate may also be used. In yet other embodiments, quicklime, which does not hydrate in a coating mix, but cures by slowly converting to limestone by adding carbon dioxide from the air, may be used. acrylonitrile, and/or acrylamide monomer. In other embodiments, the binder may include a polyurethane.

In one or embodiments, the coating composition may be characterized by the weight ratio of polymer to solids within the composition (i.e. in the cured coating). In one or more embodiments, the weight ratio of polymer to solids is at least 0.1:1, in other embodiments at least 0.3:1, in other embodiments at least 0.5:1, in other embodiments at least 0.7:1, and in other embodiments at least 0.7:1. In these or other embodiments, the weight ratio of polymer to solids is from about 0.1:1 to about 3:1, in other embodiments from about 0.3:1 to about 2:1, and in other embodiments from about 0.4:1 to about 0.8:1. It is contemplated that at higher polymer loadings, the coating composition will impart less stiffness to the fabric, and thereby advantageously allow the fabric to maintain useful flexibility. This is important, especially where the fabric is used as a backing, because the composite materials of the invention are desirably rolled for storage and shipment, unrolled during installation, and manipulated in corners and the like during installation. Thus, maintaining flexibility and/or not inhibiting the flexibility of the membrane and overall composite is technologically important.

In one or embodiments, the coating composition may be characterized by the weight of expandable graphite within the composition (i.e. in the cured coating). In one or more embodiments, the weight of expandable graphite within the coating is at least 2 wt. %, in other embodiments at least 5 wt. %, in other embodiments at least 8 wt. %, in other embodiments at least 10 wt. %, and in other embodiments at least 15 wt. %. In these or other embodiments, the weight ratio of polymer to solids is from about 2 to about 50, in other embodiments from about 5 to about 35, and in other embodiments from about 10 to about 25 wt. %.

### FABRIC BACKING

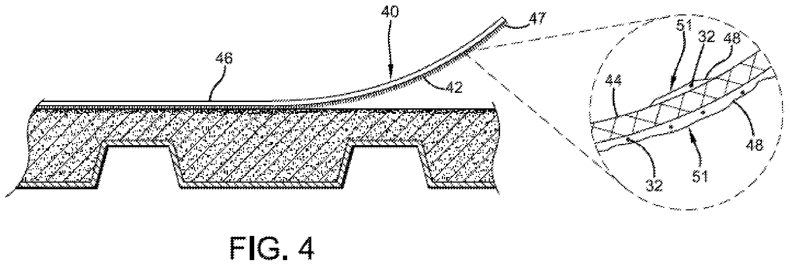

As indicated above, the roof assembly of the invention includes a membrane assembly, which may also be referred to as a composite, as shown in Fig. 3 where composite 40 includes fabric backing 42 adhered to at least a portion of one of the planar surfaces 47 of membrane 46 as claimed. Membrane 46 may include the features of the membranes described above with respect to membrane 16 (e.g. they may include fabric reinforcement 24 laminated between thermoplastic layer 26 and 28), or thermoplastic membrane 46 may have distinct features. Where membrane assembly 40 includes fabric reinforcement 24, fabric reinforcement 24 may carry a coating layer that includes expandable graphite, as described above, or it may be devoid or substantially devoid of a coating that includes expandable graphite. In one or more embodiments, membrane 46 is an unreinforced membrane; i.e. membrane 46 is devoid of reinforcement 24. In or more embodiments, membrane 46 may include a laminated structure that may include one or more extruded layers laminated to one another. In other embodiments, membrane 46 is a single extrudate. Whether or not membrane 46 includes one or more extrudates, each extrudate may, as described above, include two or more coextruded layers of similar or dissimilar thermoplastic compositions.

Fabric backing 42 includes a fabric substrate with expandable graphite disposed on a surface thereof. For example, as shown in Fig. 3, fabric 42 includes fabric substrate 44 and expandable graphite 32 disposed on a surface of substrate 44. The expandable graphite 32 is dispersed within a polymeric matrix 48, which may also be referred to as binder 48, disposed on fabric substrate 44 in the form of a coating 51. As shown in Fig. 3, coating 31 may form a layer or partial layer on the fibers or filaments of substrate 44. In other embodiments, coating 51 forms a layer or partial layer over the entire surface of substrate 44. Reference can be made to the expandable graphite and binders described above for practice of these embodiments.

In one or more embodiments, fabric substrate 44 is a synthetic fabric including glass or polymeric fibers or filaments. In particular embodiments, fabric backing 42 is a fleece, such as a napped fleece. Fleece backings of the type that are useful as fabric backings for roofing membranes are generally known in the art as described in U.S. Pat. Nos. 4,996,812, 5,422,179, 5,981,030, and 6,502,360. In particular embodiments, fabric substrate 44 is fleece prepared from polyester filaments such as those prepared from polyethylene terephthalate. In one or more embodiments, the fabric backing is a continuous filament polyester, needlepunched, nonwoven fabric. In other embodiments, the fabric backing is a scrim reinforced nonwoven polyester mat. In yet other embodiments, the fabric backing is a glass fiber mat.

In one or more embodiments, where the fabric backing is a glass fiber mat, the fabric may be characterized by a basis weight of at least 50, in other embodiments at least 60, and in other embodiments at least 70 g/m². In these or other embodiments, the glass fiber mat may be characterized by a basis weight of at most 150, in other embodiments at most 130, and in other embodiments at most 100 g/m². In one or more embodiments, the glass fiber mat may be characterized by a basis weight of from about 50 to about 150 g/m², in other embodiments from about 60 to about 130 g/m², and in other embodiments from about 70 to about 110 g/m².

In one or more embodiments, where the fabric backing is a glass fiber mat, the glass mat may be characterized by a thickness of at least 0.5 mm, in other embodiments at least 0.7 mm, and in other embodiments at least 1.0 mm. In these or other embodiments, the glass mat may be characterized by a thickness of at most 2.0 mm, in other embodiments at most 1.5 mm, and in other embodiments at most 1.2 mm. In one or more embodiments, the glass mat may be characterized by a thickness of from about 0.5 to about 2.0 mm, in other embodiments from about 0.7 to about 1.5 mm, and in other embodiments from about 1.0 to about 1.2 mm.

In one or more embodiments, where the fabric backing is a polyester fleece, the fabric may be characterized by a basis weight of at least 70, in other embodiments at least 85, and in other embodiments at least 100 g/m². in these or other embodiments, the polyester fleece may be characterized by a basis weight of at most 400, in other embodiments at most 300, and in other embodiments at most 280 g/m². In one or more embodiments, the polyester fleece may be characterized by a basis weight of from about 70 to about 400 g/m², in other embodiments from about 85 to about 300 g/m², and in other embodiments from about 100 to about 280 g/m².

In one or more embodiments, where the fabric backing is a polyester fleece, the glass mat may be characterized by a thickness of at least 0.5 mm, in other embodiments at least 0.7 mm, and in other embodiments at least 1.0 mm. In these or other embodiments, the polyester fleece may be characterized by a thickness of at most 4.0 mm, in other embodiments at most 2.0 mm, and in other embodiments at most 1.5 mm. In one or more embodiments, the polyester fleece may be characterized by a thickness of from about 0.5 to about 4.0 mm, in other embodiments from about 0.7 to about 2.0 mm, and in other embodiments from about 1.0 to about 1.5 mm.

Practice of one or more embodiments of the invention is not limited by the manner in which fabric backing 42 is attached to membrane 46. In one or more embodiments, fabric backing 42 is secured to membrane 46 by heat lamination; in other words, the membrane and fabric backing are mated while the membrane has a degree of tack resulting from heating the membrane (e.g. thermoplastic). In other embodiments, fabric backing 42 is secured to membrane 46 by way of an adhesive; for example a solvent-based or hot melt hydrocarbon polymer such as SBS or SBR may be used. In yet other embodiments, fabric backing 42 is secured to membrane 46 through the use of a tie layer, which may include a thin film of adhesive material or hot melt material. In one or more embodiments, the mode of - attachment is sufficient to create a bond between fabric backing 42 and membrane 46 such that during handling, installation and use the fabric backing maintains adherence to the membrane under conventional conditions.

According to the invention, the coating composition (i.e. the expandable graphite and the binder) is applied (i.e. disposed on) to one surface of the backing opposite the surface that the backing is secured to the membrane. This is achieved through an application method whereby the coating composition is applied to only one planar surface of the fabric. As a result, the amount of coating material that exists on a first side of the fabric is substantially greater than the amount of coating that exists on the opposite second side of the fabric. It is contemplated that this configuration will allow for maximum adhesion of the fabric to the surface of the membrane to which it is attached.

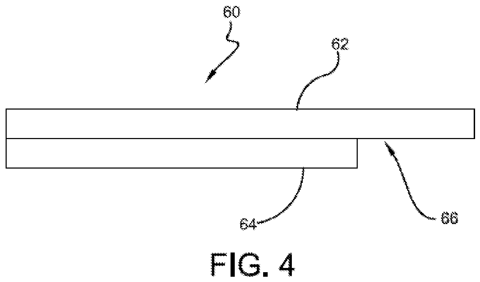

According to the composite includes a fabric backing, and the fabric backing is attached to only a portion of the membrane surface. In particular embodiments, a lap edge is maintained in the membrane for seaming adjacent membranes together. This seaming can take place through heat seaming or adhesive seaming. An example of a composite membrane including a lap seam is shown in Fig. 4, where composite 60 includes membrane 62, and fabric backing 64, which is consistent with embodiments of the invention and carries expandable graphite. Composite 60 includes lap edge 66, which extends laterally along the length of the membrane down an edge thereof. Lap edge 66 allows for membrane 62 to be exposed and thereby allows for seaming of adjacent membranes. In general, lap edge 66 could be 2-12" inches in width, although the width can vary depending on preference.

In one or more embodiments, the fabric backing may be characterized by the concentration of expandable graphite contained therein, which as descried herein, derives from a coating composition including the expandable graphite. In one or more embodiments, the fabric backing may be characterized by an expandable graphite concentration of at least 10 g/m², in other embodiments at least 20 g/m², in other embodiments at least 30 g/m², in other embodiments at least 40 g/m², in other embodiments at least 50 g/m², in other embodiments at least 60 g/m², and in other embodiments at least 70 g/m². In these or other embodiments, the backing fabric may be characterized by an expandable graphite concentration of at most 150 g/m², in other embodiments at most 140 g/m², in other embodiments at most 100 g/m², in other embodiments at most 80 g/m².

### MANUFACTURE OF MEMBRANE ASSEMBLY

In one or more embodiments, where the membrane assembly includes a fabric reinforcement laminated or sandwiched between layers of plastic material, and the fabric reinforcement carries or has disposed thereon expandable graphite, the manufacture of the membrane requires that the expandable graphite be deposited on the fabric prior to manufacture of the membrane. On the other hand, where a membrane includes a fabric backing that carries expandable graphite, the expandable graphite may be deposited in the fabric prior to attachment of the fabric to the membrane or, in other embodiments, after the fabric is attached to the membrane.

The expandable graphite can be deposited on the fabric substrate (e.g., substrate 30 or substrate 44) by using a variety of techniques. In a first embodiment, the expandable graphite is formulated into a coating composition by combining the expandable graphite with a binder. This binder can be applied in the form of a wet coating to the fabric. In other embodiments, the binder is applied to the fabric exclusive of the expandable graphite, and following application of the binder to the fabric, and within sufficient time that the binder retains some level of tack or flowability to receive the expandable graphite, the expandable graphite is deposited on the binder, which thereby serves to adhere the expandable graphite to the fabric substrate.

Besides the foregoing, the membranes of the present invention can be prepared using conventional techniques. For example, methods for extruding thermoplastic sheet and laminating thermoplastic sheets to one another, optionally together with a reinforcing scrim, are known in the art. Likewise, methods for attaching a fabric backing, such as a fleece backing, to a thermoplastic membrane are known in the art.

### INSTALLATION OF MEMBRANE ASSEMBLY

In one or more embodiments, as suggested above, the membranes of the present invention can be secured to a roof deck using a variety of techniques, all of which are known in the art. Accordingly, the skilled person will be able to install the membranes of this invention to form a Class A roofing system without undue calculation or experimentation.

## Claims

1. A roof assembly comprising:
(a.) a roof deck; and
(b.) a composite covering the deck, where the composite includes a thermoplastic membrane having opposed planar surfaces and a fabric backing attached to at least a portion of one of the planar surfaces of the membrane, where the fabric backing includes first and second planar surfaces, where the first planar surface of the fabric is attached to the membrane, where the second planar surface of the fabric has a coating composition disposed thereon, where the coating composition includes expandable graphite dispersed within a binder, where the amount of coating composition disposed on the second planar surface of the fabric is greater than any amount of coating disposed on the first planar surface of the fabric, and where the second planar surface of the fabric is proximate to said roof deck relative to the first planar surface of the fabric.

2. The roof assembly of claim 1, where the deck is combustible, and where combustible deck is wood.

3. The roof assembly of claim 1, where the thermoplastic membrane includes a thermoplastic polyolefin sheet.

4. The roof assembly of claim 1, where the fabric includes a polyester fleece secured to the thermoplastic membrane by being at least partially embedded into the planar surface of the thermoplastic membrane.

5. The roof assembly of claim 1, where said fabric backing is **characterized by** an expandable graphite concentration of at least 10 g/m².

6. The roof assembly of claim 1, where said fabric backing is **characterized by** an expandable graphite concentration of at least 20 g/m².

7. The roof assembly of claim 1, where expandable graphite has an onset temperature of at least 160°C.

8. The roof assembly of claim 1, where expandable graphite has an onset temperature of at least 180°C.

9. The roof assembly of claim 1, where the roof assembly includes a single fabric.

10. A membrane composite comprising:
(i) a thermoplastic membrane having first and second planar surfaces; and
(ii) a fabric secured to at least a portion of the second planar surface of the membrane, where the fabric includes first and second planar surfaces, where the first planar surface of the fabric is attached to the second planar surface of the membrane, where the second planar surface of the fabric has a coating composition disposed thereon, where the coating composition includes expandable graphite dispersed within a binder, where the amount of coating composition disposed on the second planar surface of the fabric is greater than any amount of coating disposed on the first planar surface of the fabric.

## Patentansprüche

1. Dachbaugruppe, umfassend:
(a.) eine Dachunterkonstruktion; und
(b.) einen Verbundwerkstoff, der die Dachunterkonstruktion bedeckt, wobei der Verbundwerkstoff eine thermoplastische Membran, die entgegengesetzte ebene Flächen aufweist und einen Stoffträger einschließt, der an zumindest einem Abschnitt einer der ebenen Flächen der Membran angebracht ist, wobei der Stoffträger eine erste und zweite ebene Fläche einschließt, wobei die erste ebene Fläche des Stoffs an der Membran angebracht ist, wobei die zweite ebene Fläche des Stoffs eine Beschichtungszusammensetzung aufweist, die darauf angeordnet ist, wobei die Beschichtungszusammensetzung Blähgraphit einschließt, der innerhalb eines Bindemittels verstreut ist, wobei die Beschichtungszusammensetzungsmenge, die auf der zweiten ebenen Fläche des Stoffs angeordnet ist, größer als jede Beschichtungsmenge ist, die auf der ersten ebenen Fläche des Stoffs angeordnet ist, und wobei die zweite ebene Fläche des Stoffs in Bezug zu der ersten ebenen Fläche des Stoffs nahe der Dachunterkonstruktion angeordnet ist.

2. Dachbaugruppe nach Anspruch 1, wobei die Unterkonstruktion brennbar ist und wobei die brennbare Unterkonstruktion Holz ist.

3. Dachbaugruppe nach Anspruch 1, wobei die thermoplastische Membran eine thermoplastische Polyolefinfolie einschließt.

4. Dachbaugruppe nach Anspruch 1, wobei der Stoff ein Polyestervlies einschließt, das an der thermoplastischen Membran befestigt ist, indem es zumindest teilweise in die ebene Fläche der thermoplastischen Membran eingebettet ist.

5. Dachbaugruppe nach Anspruch 1, wobei der Stoffträger **gekennzeichnet ist durch** eine Blähgraphitkonzentration von mindestens 10 g/m².

6. Dachbaugruppe nach Anspruch 1, wobei der Stoffträger **gekennzeichnet ist durch** eine Blähgraphitkonzentration von mindestens 20 g/m².

7. Dachbaugruppe nach Anspruch 1, wobei der Blähgraphit eine Starttemperatur von mindestens 160 °C aufweist.

8. Dachbaugruppe nach Anspruch 1, wobei der Blähgraphit eine Starttemperatur von mindestens 180 °C aufweist.

9. Dachbaugruppe nach Anspruch 1, wobei die Dachbaugruppe einen einzigen Stoff einschließt.

10. Membranverbundwerkstoff, umfassend:
(i) eine thermoplastische Membran, die eine erste und zweite ebene Fläche aufweist; und
(ii) einen Stoff, der an zumindest einem Abschnitt der zweiten ebenen Fläche der Membran angebracht ist, wobei der Stoff eine erste und zweite ebene Fläche einschließt, wobei die erste ebene Fläche des Stoffs an der zweiten ebenen Fläche der Membran angebracht ist, wobei die zweite ebene Fläche des Stoffs eine Beschichtungszusammensetzung aufweist, die darauf angeordnet ist, wobei die Beschichtungszusammensetzung Blähgraphit einschließt, der innerhalb eines Bindemittels verstreut ist, wobei die Beschichtungszusammensetzungsmenge, die auf der zweiten ebenen Fläche des Stoffs angeordnet ist, größer als jede Beschichtungsmenge ist, die auf der ersten ebenen Fläche des Stoffs angeordnet ist.

## Revendications

1. Ensemble de toit comprenant :
(a.) un pont de toit ; et
(b.) un composite couvrant le pont, où le composite inclut une membrane thermoplastique ayant des surfaces planes opposées et un support de tissu fixé à au moins une partie de l'une des surfaces planes de la membrane, où le support de tissu inclut des première et deuxième surfaces planes, où la première surface plane du tissu est fixée à la membrane, où la deuxième surface plane du tissu a une composition de revêtement disposée dessus, où la composition de revêtement inclut du graphite expansible dispersé dans un liant, où la quantité de composition de revêtement disposée sur la deuxième surface plane du tissu est supérieure à n'importe quelle quantité de revêtement disposé sur la première surface plane du tissu, et où la deuxième surface plane du tissu est à proximité dudit pont de toit par rapport à la première surface plane du tissu.

2. Ensemble selon la revendication 1, où le pont est combustible, et où le pont combustible est en bois.

3. Ensemble de toit selon la revendication 1, où la membrane thermoplastique inclut une feuille de polyoléfine thermoplastique.

4. Ensemble de toit selon la revendication 1, où le tissu inclut une nappe de polyester fixée à la membrane thermoplastique en étant au moins partiellement intégrée dans la surface plane de la membrane thermoplastique.

5. Ensemble de toit selon la revendication 1, où ledit support de tissu est **caractérisé par** une concentration de graphite expansible d'au moins 10 g/m².

6. Ensemble de toit selon la revendication 1, où ledit support de tissu est **caractérisé par** une concentration de graphite expansible d'au moins 20 g/m².

7. Ensemble de toit selon la revendication 1, où le graphite expansible a une température de départ d'au moins 160 °C.

8. Ensemble de toit selon la revendication 1, où le graphite expansible a une température de départ d'au moins 180 °C.

9. Ensemble de toit selon la revendication 1, où l'ensemble de toit inclut un tissu unique.

10. Composite pour membrane comprenant :
(i) une membrane thermoplastique ayant des première et deuxième surfaces planes ; et
(ii) un tissu fixé à au moins une partie de la deuxième surface plane de la membrane, où le tissu inclut des première et deuxième surfaces planes, où la première surface plane du tissu est fixée à la deuxième surface plane de la membrane, où la deuxième surface plane du tissu a une composition de revêtement disposée dessus, où la composition de revêtement inclut du graphite expansible dispersé dans un liant, où la quantité de composition de revêtement disposée sur la deuxième surface plane du tissu est supérieure à n'importe quelle quantité de revêtement disposé sur la première surface plane du tissu.
